(19) **Europäisches Patentamt**

**European Patent Office**

**Office européen des brevets**

(11) Veröffentlichungsnummer : **0 444 145 B1**

(12) **EUROPÄISCHE PATENTSCHRIFT**

(45) Veröffentlichungstag der Patentschrift :
**22.07.92 Patentblatt 92/30**

(51) Int. Cl.$^5$ : **G11B 7/00, G11B 11/10**

(21) Anmeldenummer : **90900793.2**

(22) Anmeldetag : **17.11.89**

(86) Internationale Anmeldenummer :
**PCT/EP89/01390**

(87) Internationale Veröffentlichungsnummer :
**WO 90/05977 31.05.90 Gazette 90/12**

(54) **SCHALTUNGSANORDNUNG ZUM ERKENNEN DES TYPS EINES OPTISCHEN AUFZEICHNUNGSTRÄGERS.**

(30) Priorität : **17.11.88 DE 3838859**

(43) Veröffentlichungstag der Anmeldung :
**04.09.91 Patentblatt 91/36**

(45) Bekanntmachung des Hinweises auf die
Patenterteilung :
**22.07.92 Patentblatt 92/30**

(84) Benannte Vertragsstaaten :
**AT BE CH DE ES FR GB IT LI LU NL SE**

(56) Entgegenhaltungen :
**FR-A- 2 575 857**
**FR-A- 2 591 787**
**PATENT ABSTRACTS OF JAPAN, vol. 11, Nr. 84 (P-556)(2531), 13 March 1987; & JP-A-61 237247**
**PATENT ABSTRACTS OF JAPAN, vol. 11, Nr. 279 (P-614)(2726), 10 September 1987; & JP-A-62 076061**
**PATENT ABSTRACTS OF JAPAN, vol. 11, nr. 2 (P-532)(2449), 6 January 1987; & JP-A-61 180935**
**PATENT ABSTRACTS OF JAPAN, vol. 10, nr. 202 (P-477)(2258), 15 July 1986; & JP-A-61 042751**
**IBM TECHNICAL DISCLOSURE BULLETIN, vol. 29, nr. 3, August 1986, NEW YORK, US, pages 995-996; "DETECTION OF OPTICAL DISK TYPE"**
**PATENT ABSTRACTS OF JAPAN, vol. 10, nr. 127 (P-455)(2184), 13 May 1986; & JP-A-60 251557**
**PATENT ABSTRACTS OF JAPAN, vol. 12, nr. 238 (P-726)(3085), 7 July 1988; & JP-A-63 029371**

(56) Entgegenhaltungen :
**PATENT ABSTRACTS OF JAPAN, vol. 12, nr. 307 (P-747)(3154), 22 August 1988; & JP-A-63 076116**
**PATENT ABSTRACTS OF JAPAN, vol. 10, nr. 361 (P-523)(2418), 4 December 1986; & JP-A-61 158055**
**PATENT ABSTRACTS OF JAPAN, vol. 11, nr. 121 (P-568)(2568), 16 April 1987; & JP-A-61 267953**

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **ZUCKER, Friedhelm**
**Albert-Schweitzer-Strasse 8**
**W-7733 Mönchweiler (DE)**
Erfinder : **BÜCHLER, Christian**
**Keltenweg 3**
**W-7730 VS-Marbach (DE)**

## Beschreibung

Die Erfindung betrifft eine Schaltungsanordnung in einem optischen Wiedergabegerät, das mit einer optischen Abtastvorrichtung ausgestattet ist, welche die Daten eines optischen und/oder magneto-optischen Aufzeichnungsträgers liest und ein optisches und/oder magneto-optisches Datensignal erzeugt.

Ein bekannter derartiger Aufzeichnungsträger ist z.B. die CD-Platte, bei der auf die lichtdurchlässige Schicht eine lichtreflektierende Aluminiumschicht folgt, die Vertiefungen, sogenannte Pits, aufweist, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird infolge destruktiver Interferenzen weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger - unter der Bezeichnung magneto-optische Platte bekannt - ist in dem Aufsatz "Magnetooptische Versuche dauern an" in Funkschau 13, 20. Juni 1986 auf Seite 37 - 41 beschrieben.

Im Gegensatz zu einer CD-Platte weist eine magneto-optische Platte keine Pits auf. Hinter der lichtdurchlässigen Schicht befindet sich eine magneto-optische Schicht, auf der Daten aufzeichenbar und von der die Daten lesbar sind. Es wird zunächst erläutert, wie die Daten auf eine magneto-optische Platte geschrieben werden.

Mittels eines auf die Platte fokussierten Laserstrahls wird die magneto-optische Schicht auf eine Temperatur erhitzt, die in der Nähe der Curie-Temperatur liegt. Meist genügt es, die magneto-optische Schicht nur etwa bis zur Kompensationstemperatur aufzuheizen, die unter der Curie-Temperatur liegt. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Kompensationstemperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

Aus der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Aus der deutschen Anmeldung P 37 32 875.1 ist ein magneto-optischer Aufzeichnungsträger bekannt, auf dem sowohl Daten in einer magnetischen Schicht als auch mittels Pits gespeichert sind.

In der deutschen Anmeldung P 37 32 874.3 ist nun eine Abtastvorrichtung beschrieben, die sowohl Daten von einer CD-Platte, als auch von einer magneto-optischen Platte, als auch von der aus der deutschen Anmeldung P 37 32 875.1 bekannten Kombination aus einer CD-Platte und einer magneto-optischen Platte lesen kann.

Um die mittels der Pits gespeicherten Daten zu gewinnen, wird ähnlich wie bei einem CD-Spieler das von der Platte reflektierte oder die Platte durchstrahlende Licht auf mindestens zwei Photodetektoren gelenkt. Das Datensignal wird aus der Summe der Ausgangssignale der beiden Photodetektoren erzeugt.

Die in der magnetischen Schicht gespeicherten Daten werden in elektrische Signale umgewandelt, indem das von der Platte reflektierte oder die Platte durchstrahlende Licht mittels eines Polarisationsstrahlteilers in zwei Strahlen aufgeteilt wird, deren Polarisationsebenen infolge des Kerr-Effektes in unterschiedliche Richtungen gedreht sind. Der eine Lichtstrahl, dessen Polarisationsebene in die eine Richtung gedreht ist, wird auf einen ersten Photodetektor gelenkt, während der andere Lichtstrahl, dessen Polarisationsebene in die andere Richtung gedreht ist, auf einen zweiten Photodetektor strahlt. Aus dem Differenzsignal der beiden Photodetektoren wird das Datensignal gewonnen, das die in der magnetischen Schicht gespeicherten Daten widerspiegelt.

Um aus dem von der Platte reflektierten oder die Platte durchstrahlenden Licht die sowohl mittels der Pits als auch die in der magnetischen Schicht gespeicherten Daten zu gewinnen, können dieselben beiden Photodetektoren verwendet werden. Im einen Fall wird aus deren Ausgangssignalen die Summe, im anderen Fall die Differenz gebildet.

Weil mit der aus der deutschen Anmeldung P 37 32 874.3 bekannten optischen Abtastvorrichtung sowohl CD-Platten, als auch magneto-optische Platten, als auch die in der deutschen Anmeldung P 37 32 875.1 beschriebene Kombination aus einer optischen und einer magneto-optischen Platte gelesen werden können, wird dem Benutzer die Bedienung des Gerätes erleichtert, wenn es automatisch erkennt, welcher Typ von Platte eingelegt wurde.

In der JP-A 61 23 7247 ist eine Schaltungsanordnung beschrieben, die erkennt, ob eine optische oder eine magneto-optische Platte im Wiedergabegerät liegt.

Der Ausgang eines ersten Detektors ist mit dem ersten Eingang eines Differenzverstärkers und eines Addierers verbünden. Der Ausgang eines zweiten Detektors ist mit dem zweiten Eingang des Differenzverstärkers und des Addierers verbunden. Beim Lesen eines optischen Aufzeichnungsträgers, z.B. einer CD, ändert sich nun das Signal am Ausgang des Addierers, nicht jedoch am Ausgang des Differenzverstärkers in Abhängigkeit von den auf dem Aufzeichnungsträger gespeicherten Daten. Beim Lesen eines magneto-optischen Aufzeichnungsträgers ändert sich dagegen das Signal am Ausgang des Differenzverstärkers, während das Signal am Ausgang des Addierers konstant bleibt. Eine Entscheidungsschaltung erkennt am Pegel des Signals am Ausgang des Differenzverstärkers und des Addierers, ob die Daten eines optischen oder eines magneto-optischen Aufzeichnungsträgers gelesen werden. Mittels eines Schalters wird entweder der Ausgang des Differenzverstärkers oder des Addierers mit dem Eingang einer Signalverarbeitungsschaltung verbunden.

Es ist daher Aufgabe der Erfindung, eine Schaltungsanordnung anzugeben, die unabhängig davon, auf welche Art und Weise das Datensignal, das die mittels Pits gespeicherten Daten wiedergibt, und das Datensignal, das die in der magnetischen Schicht aufgezeichneten Daten wiedergibt, erzeugt werden, automatisch den Typ eines optischen Aufzeichnungsträgers erkennt.

Die Erfindung löst diese Aufgabe dadurch, daß derjenige Ausgang der optischen Abtastvorrichtung, an dem das optische Datensignal abnehmbar ist, welches die mittels der Pits gespeicherten Daten enthält, über einen Hochpaß und einen dazu in Reihe geschalteten Gleichrichter mit dem ersten Eingang und über einen Tiefpaß mit dem zweiten Eingang eines ersten Vergleichers verbunden ist, dessen Ausgang mit einem Steuerprozessor verbunden ist.

Es zeigen

Figur 1 ein erstes Ausführungsbeispiel der Erfindung
Figur 2 die Datensignale unterschiedlicher Aufzeichnungsträger.

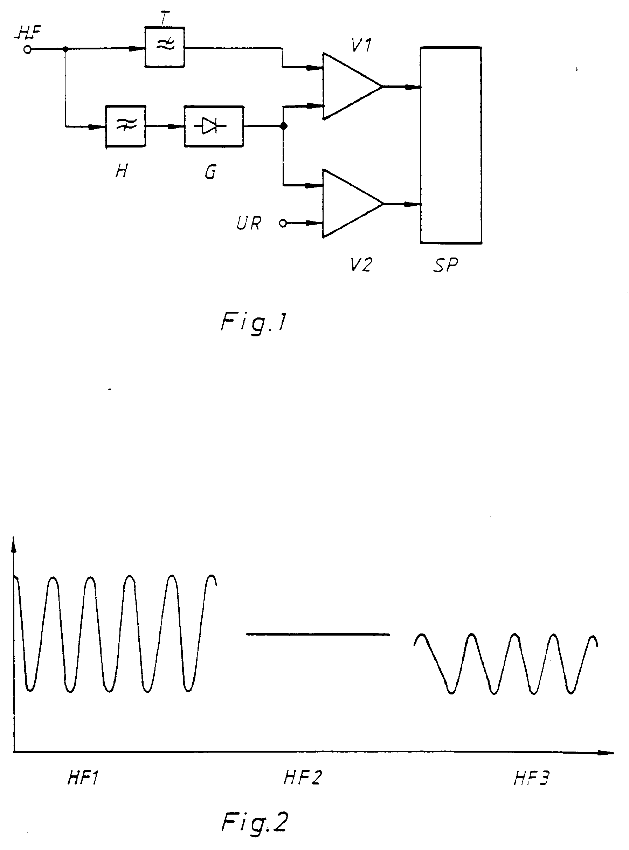

Anhand des in Figur 1 abgebildeten Ausführungsbeispiels wird die Erfindung nun zuerst beschrieben und anschließend mit Hilfe der in Figur 2 dargestellten Datensignale erläutert.

In der Figur 1 wird das Datensignal HF, das die mittels der Pits gespeicherten Daten enthält, über einen Hochpaß H und einen dazu in Reihe geschalteten Gleichrichter G dem ersten Eingang eines Vergleichers V1 und V2 sowie über einen Tiefpaß dem zweiten Eingang des Vergleichers V1 zugeführt. Am zweiten Eingang des Vergleichers V2 liegt eine Referenzspannung UR. Die Ausgänge der beiden Vergleicher V1 und V2 sind mit einem Steuerprozessor SP verbunden.

In der Figur 2 ist sind Datensignal HF1 einer CD-Platte, das Datensignal HF2 einer magneto-optischen Platte und das Datensignal HF3 einer Kombination aus beiden abgebildet.

Das Datensignal HF1 einer CD-Platte, auf der Daten mittels Pits gespeichert sind, ist ein Hochfrequenzsignal, dessen Mittelwert annähernd ein Gleichpegel ist. Weil auf einer magneto-optischen Platte keine Pits vorhanden sind, ist die Intensität des von der Platte reflektierten oder die Platte durchstrahlenden Lichts stets annähernd gleich groß. Daher ist das aus der Summe der Ausgangssignale zweier Photodetektoren gewonnene Signal HF2 einer magneto-optischen Platte annähernd ein Gleichsignal.

Bei dem aus der deutschen Anmeldung P 37 32 875.1 bekannten Aufzeichnungsträger ist das Summensignal der Ausgangssignale zweier Photodetektoren ebenfalls ein hochfrequentes Signal, jedoch mit einer geringeren Amplitude als bei einer CD-Platte, .weil die Intensitätsunterschiede beim reflektierten bzw. durchstrahlenden Licht infolge einer geringeren Pit-Tiefe ebenfalls geringer werden.

Wenn eine CD-Platte im Gerät liegt, ist das Datensignal HF1 ein hochfrequentes Signal mit einem überlagerten Gleichanteil. Daher ist der Pegel am ersten Eingang des Vergleichers V1 größer als an dessen zweitem Eingang; auch der Pegel am ersten Eingang des Vergleichers V2 ist größer als die Referenzspannung UR. An den Ausgangssignalen der beiden Vergleicher V1 und V2, die in diesem Fall beispielsweise hohen Pegel haben mögen, erkennt der Steuerprozessor SP, daß es sich bei der eingelegten Platte um eine CD-Platte han-

3

delt.

Wird nun die aus der deutschen Anmeldung P 37 32 875.1 bekannte Kombination eines optischen und eines magneto-optischen Aufzeichnungsträgers in das Gerät eingelegt, so ist das Datensignal HF3 ebenfalls ein hochfrequentes Signal, dem ein Gleichanteil überlagert ist, jedoch mit einer geringeren Amplitude als bei einer CD-Platte. Deshalb ist der Pegel am ersten Eingang des Vergleichers V1 größer als an dessen zweitem Eingang; die Referenzspannung UR ist aber so groß gewählt, daß bei dieser Platte der Pegel am ersten Eingang des Vergleichers V2 kleiner ist als die Referenzspannung UR an dessen zweitem Eingang. Am Ausgangssignal des Vergleichers V1, das hohen Pegel hat, und am Ausgangssignal des Vergleichers V2, das niederen Pegel hat, erkennt der Steuerprozessor SP, daß eine Platte gemäß der deutschen Anmeldung P 37 32 875.1 im Gerät liegt.

Wenn eine magneto-optische Platte gelesen werden soll, hat das Datensignal HF2 keine hochfrequenten Anteile; weil es ein Gleichsignal ist, sind die Pegel an den ersten Eingängen der Vergleicher V1 und V2 ungefähr null. Weil der Pegel am zweiten Eingang des Vergleichers V1 jetzt aber größer ist als der Pegel an dessen erstem Eingang, gibt der Vergleicher V1 ein Signal mit niederem Pegel an seinem Ausgang ab. Daran erkennt der Steuerprozessor SP, daß der Bediener eine magneto-optische Platte ausgesucht hat. Das Signal am Ausgang des Vergleichers V2 spielt bei dieser Entscheidung keine Rolle. Es kann "HIGH" oder "LOW" sein.

Ein zweites Ausführungsbeispiel der Erfindung unterscheidet sich vom ersten dadurch, daß der erste Eingang des zweiten Vergleichers V2 nicht mit dem Ausgang des Gleichrichters G, sondern mit dem Ausgang des Tiefpasses T verbunden ist.

Eine CD-Platte oder eine magneto-optische Platte wird vom zweiten Ausführungsbeispiel auf die gleiche Art und Weise erkannt wie beim ersten Ausführungsbeispiel. Bei einer Platte gemäß der deutschen Anmeldung P 37 32 875.1 wird anstelle des gleichgerichteten HF-Anteils der überlagerte Gleichanteil des Datensignals HF3 mit der Referenzspannung UR im Vergleicher V2 verglichen.

Wie bereits erwähnt ist das Datensignal HF3 ein hochfrequentes Signal, dem ein Gleichanteil überlagert ist, jedoch mit einer geringeren Amplitude als bei einer CD-Platte. Deshalb ist der Pegel am ersten Eingang des Vergleichers V1 größer als an dessen zweitem Eingang; die Referenzspannung UR ist aber so groß gewählt, daß bei dieser Platte der Pegel am ersten Eingang des Vergleichers V2 kleiner ist als die Referenzspannung UR an dessen zweitem Eingang. Am Ausgangssignal des Vergleichers V1, das hohen Pegel hat, und am Ausgangssignal des Vergleichers V2, das niederen Pegel hat, erkennt der Steuerprozessor SP, daß eine Platte gemäß der deutschen Anmeldung P 37 32 875.1 im Gerät liegt.

## Patentansprüche

1. Schaltungsanordnung in einem optischen Wiedergabegerät, das mit einer optischen Abtastvorrichtung ausgestattet ist, welche die Daten eines optischen und/oder magneto-optischen Aufzeichnungsträgers liest und ein optisches (HF) und/oder magneto-optisches Datensignal erzeugt, **dadurch gekennzeichnet**, daß derjenige Ausgang der optischen Abtastvorrichtung, an dem das optische Datensignal (HF) abnehmbar ist, welches die mittels Pits gespeicherten Daten enthält, über einen Hochpaß (H) und einen dazu in Reihe geschalteten Gleichrichter (G) mit dem ersten Eingang und über einen Tiefpaß (T) mit dem zweiten Eingang eines ersten Vergleichers (V1) verbunden ist, dessen Ausgang mit einem Steuerprozessor (SP) verbunden ist, wobei der Pegel des Signales am Ausgang des ersten Vergleichers (V1) angibt, ob es sich um einen magneto-optischen Aufzeichnungsträger handelt oder nicht.

2. Schaltungsanordnung nach Anspruch 1, **dadurch gekennzeichnet,** daß der Ausgang eines zweiten Vergleichers (V2), dessen erster Eingang mit dem Ausgang des Gleichrichters (G) verbunden ist und an dessen zweitem Eingang eine Referenzspannung (UR) liegt, mit dem Steuerprozessor (SP) verbunden ist, wobei der Pegel des Signales am Ausgang des zweiten Vergleichers (V2) für den Fall, daß es sich nicht um einen magneto-optischen Aufzeichnungsträger handelt, angibt, ob es sich um einen optischen Aufzeichnungsträger oder um eine Kombination eines optischen und eines magneto-optischen Aufzeichnungsträgers handelt.

3. Schaltungsanordnung nach Anspruch 1, **dadurch gekennzeichnet,** daß der Ausgang eines zweiten Vergleichers (V2), dessen erster Eingang mit dem Ausgang des Tiefpasses (T) verbunden ist und an dessen zweitem Eingang eine Referenzspannung (UR) liegt, mit dem Steuerprozessor (SP) verbunden ist, wobei der Pegel des Signales am Ausgang des zweiten Vergleichers (V2) für den Fall, daß es sich nicht um einen magneto-optischen Aufzeichnungsträger handelt, angibt, ob es sich um einen optischen Aufzeichnungsträger oder um eine Kombination eines optischen und eines magneto-optischen Aufzeichnungsträgers handelt.

**Claims**

1. A circuit arrangement in an optical playback device, which is equipped with an optical scanning device which reads the data from an optical and/or magneto-optical recording medium and produces an optical (HF) and/or magneto-optical data signal, **characterised in that** the output of the optical scanning device at which the optical data signal (HF) can be tapped, the latter containing the data stored with the aid of pits, is connected to the first input, via a high pass filter (H) and a rectifier (G) connected in series therewith, and to the second input, via a low pass filter (T), of a first comparator (V1), the output of the comparator being connected to a control processor (SP), in which the level of the signal at the output of the first comparator (V1) states whether it is a magneto-optical recording medium or not.

2. A circuit arrangement according to claim 1, **characterised in that** the output of a second comparator (V2), whose first input is connected to the output of the rectifier (G) and at whose second input there is a reference voltage (UR), is connected to the control processor (SP), in which the level of the signal at the output of the second comparator (V2) states, in the case where it is not a magneto-optical recording medium, whether it is an optical recording medium or a combination of an optical and a magneto-optical recording medium.

3. A circuit arrangement according to claim 1, **characterised in that** the output of a second comparator (V2), whose first input is connected to the output of the low pass filter (T) and at whose second input there is a reference voltage (UR), is connected to the control processor (SP), in which the level of the signal at the output of the second comparator (V2) states, in the case where it is not a magneto-optical recording medium, whether it is an optical recording medium or a combination of an optical and a magneto-optical recording medium.

**Revendications**

1. Dispositif de circuit dans un appareil de reproduction optique qui est équipé d'un dispositif de balayage optique qui lit les données d'un support d'enregistrement optique et/ou magnéto-optique et qui produit un signal de données optique (HF) et/ou magnéto-optique, **caractérisé en ce** que la sortie du dispositif de balayage optique, sur laquelle le signal de données optique (HF) peut être prélevé, qui contient les données enregistrées à l'aide de pits, est reliée par un passe-haut (H) et un redresseur (G) monté en série, à la première entrée et, par un passe-bas (T), à la seconde entrée d'un premier comparateur (V1) dont la sortie est reliée au processeur de commande (SP), le niveau du signal à la sortie du premier comparateur (V1) indiquant s'il s'agit d'un support d'enregistrement magnéto-optique ou non.

2. Dispositif de circuit selon la revendication 1, **caractérisé en ce** que la sortie d'un second comparateur (V2), dont la première entrée est reliée à la sortie du redresseur (G) et à la seconde entrée duquel est appliquée une tension de référence (UR), est reliée au processeur de commande (SP), le niveau du signal à la sortie du second comparateur (V2) indiquant, pour le cas où il ne s'agit pas d'un support d'enregistrement magnéto-optique, s'il s'agit d'un support d'enregistrement optique ou d'une combinaison d'un support d'enregistrement optique et d'un support d'enregistrement magnéto-optique.

3. Dispositif de circuit selon la revendication 1, **caractérisé en ce** que la sortie d'un second comparateur (V2), dont la première entrée est reliée à la sortie du passe-bas (T) et à la seconde entrée duquel est appliquée une tension de référence (UR), est reliée au processeur de commande (SP), le niveau du signal à la sortie du second comparateur (V2) indiquant, pour le cas où il ne s'agit pas d'un support d'enregistrement magnéto-optique, s'il s'agit d'un support d'enregistrement optique ou d'une combinaison d'un support d'enregistrement optique et d'un support d'enregistrement magnéto-optique.

Fig.1

HF1          HF2          HF3

Fig.2